**Europäisches Patentamt**

**European Patent Office**

**Office européen des brevets**

(11) Veröffentlichungsnummer: **0 156 313**
**A2**

(12) # EUROPÄISCHE PATENTANMELDUNG

(21) Anmeldenummer: **85103320.9**

(22) Anmeldetag: **21.03.85**

(51) Int. Cl.⁴: **G 03 B 41/00**

(30) Priorität: **21.03.84 DE 3410398**

(43) Veröffentlichungstag der Anmeldung:
**02.10.85 Patentblatt 85/40**

(84) Benannte Vertragsstaaten:
**CH DE FR GB IT LI**

(71) Anmelder: **ISCO-OPTIC GMBH**
**An der Lutter 22**
**D-3400 Göttingen(DE)**

(72) Erfinder: **Lindstedt, Kurt**
**Über den Höfen 22**
**D-3400 Göttingen(DE)**

(72) Erfinder: **Berggren, Glenn M.**
**1300 Optical Drive**
**Azusa California 91702(US)**

(74) Vertreter: **Schmitz, Waldemar, Dipl.-Phys.**
**Patentanwälte Dipl.-Ing. H. Hauck Dipl.-Phys. W.**
**Schmitz et al,**
**Dipl.-Ing. E. Graalfs; Dipl.-Ing. W. Wehnert Dipl.-Phys. W.**
**Carstens; Dr.-Ing. W. Döring Neuer Wall 41**
**D-2000 Hamburg 36(DE)**

(54) Verfahren und Vorrichtungen zum Herstellen bzw. Wiedergeben von 35 mm-Kinofilm.

(57) Verfahren zum Herstellen von 35 mm-Kinofilm, bei dem Filmbilder mit quer zur Filmlänge liegender Bildbreite und in der Breite um einen anamorphotischen Kompressionsfaktor komprimiertem Bildinhalt hergestellt werden, dadurch gekennzeichnet, daß ein Kompressionsfaktor von etwa 1,4 bis 1,6 verwendet wird.

EP 0 156 313 A2

Croydon Printing Company Ltd

PATENTANWÄLTE
DR.-ING. H. NEGENDANK (-1973)
HAUCK, SCHMITZ, GRAALFS, WEHNERT, DÖRING
HAMBURG   MÜNCHEN   DÜSSELDORF

C156313

PATENTANWÄLTE · NEUER WALL 41 · 2000 HAMBURG 36

ISCO-OPTIC GMBH
An der Lutter 22

3400 Göttingen

Dipl.-Phys. W. SCHMITZ · Dipl.-Ing. E. GRAALFS
Neuer Wall 41 · 2000 Hamburg 36
Telefon + Telecopier (040) 36 67 55
Telex 02 11 780 inpat d

Dipl.-Ing. H. HAUCK · Dipl.-Ing. W. WEHNERT
Mozartstraße 23 · 8000 München 2
Telefon + Telecopier (089) 53 92 38
Telex 05 216 553 pnmu d

Dr.-Ing. W. DÖRING
K.-Wilhelm-Ring 41 · 4000 Düsseldorf 11
Telefon (02 11) 57 50 27

ZUSTELLUNGSANSCHRIFT / PLEASE REPLY TO:       HAMBURG, 19. März 1985

Verfahren und Vorrichtungen zum Herstellen

bzw. Wiedergeben von 35 mm-Kinofilm

Die Erfindung betrifft zunächst ein Verfahren zum Herstellen von 35 mm-Kinofilm nach dem Oberbegriff des Anspruches 1.

Ferner betrifft die Erfindung ein Verfahren zum Wiedergeben von 35 mm-Kinofilm nach dem Oberbegriff des Anspruches 4.


Anamorphotische Verzerrungen der angegebenen Art sind seit langem bei verschiedenen Panorama-Breitwand-Filmvorführungen üblich. Dabei hat die Wiedergabewand ein Seitenverhältnis (Verhältnis Breite : Höhe) von 2,35 oder 2,55, und es wird ein Kompressionsfaktor von 2,0 und ein Vorlageformat von 21,3 mm x 18,2 mm (Seitenverhältnis 1,170) bzw. 23,2 mm x 18,2 mm (Seitenverhältnis 1,275) verwendet. Das maximal mögliche Filmbildformat (ohne Berücksichtigung der Tonspuren) von etwa 24 mm x 19 mm (Seitenverhältnis 1,263) wird also gut

ausgenutzt.

...../2

European Patent Attorneys    Zugelassene Vertreter beim Europäischen Patentamt
Deutsche Bank AG Hamburg, Nr. 05/28 497 (BLZ 200 700 00) · Postscheck Hamburg 2842-206
Dresdner Bank AG Hamburg, Nr. 933 60 35 (BLZ 200 800 00)

0156313

In der vorliegenden Beschreibung bezieht sich der Ausdruck "Filmbildformat" auf die Abmessungen der auf dem zur Wiedergabe bestimmten, positiven Film vorliegenden Bilder. Der Ausdruck "Vorlageformat" bezieht sich auf die Abmessungen des von den optischen Wiedergabeeinrichtungen erfaßten Bildfeldes auf dem zur Wiedergabe bestimmten positiven Film.

Falls Filme, die nach dem beschriebenen Panorama-Breitwand-Verfahren hergestellt wurden, auf Wiedergabeformaten mit anderen Seitenverhältnissen wiedergegeben werden, muß ein entsprechender Verlust an Wiedergabefläche oder an Bildinhalt in Kauf genommen werden. Bei großen Unterschieden zwischen den Seitenverhältnissen ergeben sich dadurch beträchtliche Unbequemlichkeiten und Qualitätseinbußen. Dies ist allgemein bekannt, z.B. von der Wiedergabe auf Fernseh-Bildschirmen her, die ein Seitenverhältnis von nur etwa 1,33 haben.

Ein weiterer Nachteil der beschriebenen Panorama-Breitwand-Verfahren besteht darin, daß die Breite des wiedergegebenen Bildes im Verhältnis zur Höhe als zu groß empfunden wird, obwohl grundsätzlich ein verhältnismäßig breites Bild erwünscht ist, weil die Aufnahmefähigkeit des menschlichen Auges in der Breite größer ist als in der Höhe.

Die beschriebenen Nachteile haben dazu geführt, daß oft eine Breitwand-Wiedergabe mit einem Seitenverhältnis von nur etwa

0156313

1,85 bevorzugt wird. Dabei wird eine Kompression des Bildes in der Breite nicht angewendet; statt dessen wird bei der Wiedergabe eine Blende vor dem Film angeordnet, die nur ein diesem  Seitenverhältnis entsprechendes Vorlageformat freiläßt. Bei dem erwähnten Seitenverhältnis von 1,85 beträgt das Vorlageformat in der Praxis normalerweise 20,9 mm x 11,3 mm. Um den Verlust an Bildhöhe auszugleichen, muß bei der Wiedergabe entsprechend stärker vergrößert werden als bei Wiedergabe des vollen Filmbildes. Die notwendigerweise eintretenden Einbußen an Helligkeit, Brillanz und Schärfe des wiedergegebenen Bildes werden in Kauf genommen. Als Vorteil bleibt, daß durch Auswechseln oder Weglassen der Blende der Film wahlweise auch in dem Standard-Vorlage- Seitenverhältnis von etwa 1,375 (Vorlageformat 20,9 mm x 15,2 mm) wiedergegeben und ohne weiteres (mit vernachlässigbarem Verlust an Bildfläche) in Video-Einrichtungen verarbeitet werden kann,

die auf das Fernsehbild-Seitenverhältnis von etwa 1,33 ausgelegt
sind. Wegen dieser Vorteile werden viele Kinofilme zwar in der
herkömmlichen Weise so hergestellt, daß sie mit einem Vorlageformat von 20,9 x 15 mm (Seitenverhältnis 1,375) abspielbar
sind, jedoch werden bei der Aufnahme die bildbestimmenden
Szenen in denjenigen Teilbereich des Bildes gelegt, der bei
der erwähnten einfachen Breitwand-Wiedergabe im Seitenverhältnis 1,85 benutzt wird. Die dadurch bedingten Einschränkungen
der künstlerischen Gestaltungsmöglichkeiten werden in Kauf
genommen.

Die oben beschriebenen Verfahren haben sich seit vielen
Jahren in der Technik eingebürgert. Die in der Praxis vorkommenden Anwendungsfälle konnten damit in annehmbarer Weise
abgedeckt werden.

Die vorliegende Erfindung geht von der Aufgabe aus, Verfahren
zum Herstellen und Wiedergeben von 35 mm-Kinofilm zu schaffen,
die bei geringem Aufwand zu einer deutlich verbesserten
Qualität des wiedergegebenen Bildes und zu einer besseren Ausnutzung des Filmmaterials führen.

Nach der Erfindung wird diese Aufgabe hinsichtlich des
Herstellungsverfahrens gelöst mit dem Verfahren nach dem
Anspruch 1, hinsichtlich des Wiedergabeverfahrens mit dem
Verfahren nach dem Anspruch 4.

Nach der Erfindung wird in geradem Gegensatz zum Stand der
Technik die anamorphotische Breiten-Kompression so gewählt,
daß das bei 35 mm-Kinofilm übliche Filmbild- oder Vorlage-
Seitenverhältnis von 1,333 bis 1,375 in ein Wiedergabe-
Seitenverhältnis von etwa 2 umgesetzt wird. Die Erfahrung
hat gezeigt, daß ein derartiges Wiedergabe-Seitenverhältnis
besonders günstig ist, weil es den Fähigkeiten des menschlichen
Auges am besten entspricht.

Im Vergleich zu herkömmlichen Breitbild-Verfahren ergibt sich

0156313

eine überraschend große Anzahl von Vorteilen: Anders als bei dem weiter vorn beschriebenen Panorama-Breitbild-Verfahren mit Wiedergabe-Seitenverhältnissen von 2,35 oder 2,55 und Vorlage-Seitenverhältnissen von 1,170 bzw. 1,275 kann das Filmbild praktisch verlustfrei mit Video-Verarbeitungseinrichtungen (Seitenverhältnis 1,333) verarbeitet werden. Bei der Wiedergabe auf Fernseh-Bildschirmen (Seitenverhältnis 1,333) ergibt sich ein geringerer Verlust an Schirm- oder Bildfläche, weil das Seitenverhältnis 2 näher bei dem Fernseh-Seitenverhältnis 1,33 liegt als das Seitenverhältnis 2,35 oder 2,55 des herkömmlichen Panorama-Breitbild-Verfahrens. Gegenüber dem ebenfalls weiter vorn beschriebenen herkömmlichen einfachen Breitwandverfahren mit einem Wiedergabe-Seitenverhältnis von 1,85 ohne anamorphotische Bildkompression ergibt sich der Vorteil, daß das Filmbildformat wesentlich besser genutzt wird. Insbesondere kann die gleiche Vorlage-Höhe wie bei der herkömmlichen 35 mm-Kinoprojektion ohne Anamorphot verwendet werden, so daß der Bildinhalt der Höhe nach unbeschnitten bleibt und derselbe Abbildungsmaßstab verwendet werden kann wie bei herkömmlicher nicht-anamorphotischer Kinoprojektion. Das gleiche gilt natürlich auch aufnahmeseitig, so daß insgesamt der Vorteil besteht, daß vorhandene Aufnahme- und Wiedergabeeinrichtungen für normalen 35 mm-Kinofilm weiter benutzt werden können; es ist nur die Vorschaltung eines Anamorphoten erforderlich. Im Vergleich zu dem herkömmlichen einfachen Breitwandverfahren mit Wiedergabe-Seitenverhältnis 1,85 ist wegen der geringeren

.../6

Vergrößerung und wegen des größeren Vorlage-Formats die Bildqualität (Bildhelligkeit, Brillanz, Farbsättigung, Schärfe,
vertikaler Bildstand) stark verbessert. Diese erheblich verbesserte Wiedergabe-Bildqualität macht Kinovorführungen für
das Publikum anziehender. Die Entfernungseinstellung
(Fokussierung) bei der Wiedergabe ist weniger kritisch.

Es versteht sich, daß das erfindungsgemäße Verfahren mit
denselben Vorteilen auch bei anderen Filmbildformaten mit
ähnlichen Seitenverhältnissen wie beim 35 mm-Normalfilm
(1,375) anwendbar ist. Besonders interessant ist die Tatsache,
daß 35 mm-Kinofilm grundsätzlich für Filmbilder mit einem
Seitenverhältnis von 1,333 geeignet ist.Ein derartiges Filmbildformat ist gleich dem Fernseh-Seitenverhältnis von 1,333.
Nach dem erfindungsgemäßen Verfahren ergibt sich dann z.B.
mit einem Kompressionsfaktor von 1,5 ein Wiedergabe-Seitenverhältnis von 2,0. Das bedeutet, daß man nach dem erfindungsgemäßen Verfahren eine maximale Ausnutzung der auf dem 35 mm-
Kinofilm zur Verfügung stehenden Filmfläche mit video-kompatiblem
Seitenverhältnis, voller Video-Verarbeitbarkeit und Wiedergabe
in dem für die Betrachtung besonders günstigen Seitenverhältnis
2,0 vereinigen kann. Es versteht sich, daß bei Vorlageformaten,
die größer als das herkömmliche Vorlageformat von 20,9 mm
x 15,2 mm sind, der Qualitätsgewinn im Vergleich zu dem
herkömmlichen einfachen Breitwandverfahren ohne Anamorphot
noch sehr viel größer ist.

Das erfindungsgemäße Verfahren bietet weiter den Vorteil,
daß erforderlichenfalls auch eine Wiedergabe auf herkömmliche
Wiedergabe-Bildformate mit einem Seitenverhältnis von etwa
1,3 bis 1,4, insbesondere dem in der Praxis eingeführten herkömmlichen Seitenverhältnis 1,375, wie auch auf Panorama-
Breitwand-Bildwände mit einem Seitenverhältnis zwischen etwa
2,3 und 2,6, insbesondere den in die Praxis eingeführten
Seitenverhältnissen 2,35 und 2,55, ohne störende Verluste möglich
ist, weil das erfindungsgemäße Verfahren, das auf ein Wiedergabe-Seitenverhältnis um 2 ausgelegt ist, eine Mittelstellung
einnimmt zwischen Aufnahmen ohne Breitenkompression und
Aufnahmen mit dem bisher üblichen Breiten-Kompressionsfaktor
von 2,0. In jedem Fall wird man bei der Wiedergabe in solchen
verfahrensfremden Seitenverhältnissen darauf achten, daß das
Filmbild- oder Vorlageformat möglichst gut ausgenutzt wird.

Das erfindungsgemäße Verfahren ist somit insbesondere
geeignet als ein neues Standardverfahren, das bei der für
das menschliche Auge besonders natürlich wirkenden Wiedergabe
mit einem Seitenverhältnis von 1,8 bis 2,2, insbesondere
1,85 oder 2,0, eine ganz erheblich bessere Bildqualität liefert
als vorbekannte Verfahren, jedoch auch für herkömmliche

0156313

Standard-Wiedergabeformate von z.B. 1,375 wie auch für herkömmliche Panorama-Breitwandformate mit einem Seitenverhältnis von z.B. 2,35 eine gute Wiedergabequalität ermöglicht.

In der Praxis erhält man ein für die meisten Zwecke der
Erfindung voll zufriedenstellendes Ergebnis bei Wahl des
Kompressionsfaktors zu etwa 1,5. Bei voller Ausnutzung der
herkömmlichen Vorlage-Höhe von 15,2 mm ergibt sich dann eine
Wiedergabe im Seitenverhältnis 2,0 bei einer Vorlage-Breite
von 15,2 mm x 2/1,5 = 20,27 mm. Die Einbuße gegenüber der
herkömmlichen normalen Vorlage-Breite von 20,9 beträgt nur
etwa 3 % und ist somit vernachlässigbar. Das Vorlage-Seitenverhältnis beträgt dann 20,27/15,2 = 1,33, ist also für
Video-Verarbeitung ohne Einbuße geeignet.

Bei Wiedergabe im Seitenverhältnis 1,85, wie es bei vielen
bereits vorhandenen Wiedergabe-Breitwänden vorliegt, ergibt
sich bei voller Ausnutzung der herkömmlichen Vorlage-Höhe
von 15,2 mm eine nutzbare Vorlage-Breite von 15,2 mm x
1,85/1,5 = 18,75 mm. Auch das ist im Vergleich zu der
vollen herkömmlichen Vorlage-Breite von 20,9 mm noch annehmbar. Der Verlust an Filmfläche beträgt nur etwa 10 %. Das
Vorlage-Seitenverhältnis beträgt dann 18,75/15,2 = 1,233. Beim
Verarbeiten auf Video-Einrichtungen mit dem Seitenverhältnis
1,33 geht also dann etwa 8 % Bildfläche verloren. Auch das
ist noch tragbar.

0156313

Im Gegensatz dazu ergibt sich bei dem herkömmlichen einfachen
Breitwandverfahren ohne Anamorphot mit einem Vorlageformat
von 20,9 x 11,3 ein Verlust an Filmfläche von über 25 % und
ein Verlust an Bildhelligkeit (Beleuchtungsstärke) von über
25 % im Vergleich zu dem vollen Standard-Vorlage-Format
von 20,9 mm x 15,2 mm. Die Vorteile des erfindungsgemäßen
Verfahrens werden noch größer, wenn man durch Wahl eines
größeren Vorlage-Formats die maximal pro Bild zur Verfügung
stehende Filmfläche von etwa 19 mm x 24 mm noch besser
ausnutzt. So kann insbesondere bei einem Wiedergabe-Seitenverhältnis von 1,85 und einem Kompressionsfaktor von 1,5
ein entsprechendes Vorlage-Seitenverhältnis von 1,233 mit
einem Vorlage-Format von 21,46 mm x 17,40 mm verwirklicht
werden, dessen Fläche von 373 mm² um 17 % größer ist als
die Fläche (318 mm²) des herkömmlichen Vorlage-Formats
von 20,9 mm x 15,2 mm².

Die praktische Anwendung der Erfindung macht keine Schwierigkeiten. Insbesondere kann erfindungsgemäß hergestellter
Film in der gleichen Weise wie herkömmlicher Film in
Filmpackungen verpackt gehandhabt und vertrieben werden.

0156313

Zur Durchführung der Erfindung sind nur einfache vorrichtungsmäßige Maßnahmen erforderlich. Insbesondere kann für das Herstellungsverfahren eine 35 mm-Filmkamera mit Aufnahme-Anamorphot zur Breiten-Kompression verwendet werden, wobei erfindungsgemäß der Anamorphot einen Kompressionsfaktor von 1,4 bis 1,6, vorzugsweise 1,5, hat. Für die Wiedergabe kann eine 35 mm-Kinofilm-Wiedergabeeinrichtung mit Wiedergabe-Anamorphot zur Aufhebung einer anamorphotischen Breiten-Kompression der Filmbilder verwendet werden, wobei erfindungsgemäß der Wiedergabe-Anamorphot zur Aufhebung einer Kompression um den Faktor 1,4 bis 1,6, vorzugsweise 1,5, ausgebildet ist. Derartige Vorrichtungen sind nicht komplizierter oder kostspieliger als bekannte Vorrichtungen mit anamorphotischer Bildkompression. Besonders vorteilhaft ist es dabei, wenn die Vorrichtung für wahlweise Einschaltung des Anamorphoten ausgebildet ist. Man kann dann mit ein und derselben Vorrichtung auch normalen, nicht in der Breite komprimierten Film verarbeiten.

0156313

Die erfindungsgemäße Herstellung von Kinofilm ist auf beliebigem Wege möglich. Die besten Ergebnisse hinsichtlich Bildqualität erhält man, wenn der Kinofilm von einem unter horizontaler Bildkompression aufgenommenen Aufnahmefilm größerer Breite unter optischer Verkleinerung kopiert wird.

Die vorteile der Erfindung kommen jedoch auch schon dann voll zur Geltung, wenn der Kinofilm von einem unter horizontaler Bildkompression aufgenommenen Aufnahmefilm gleicher Breite kontaktkopiert wird. Dieses Verfahren ist sehr einfach und kann mit den üblichen Vorrichtungen ausgeführt werden.

Der erfindungsgemäße Kinofilm kann auch aus einem mit einem Breiten-Kompressionsfaktor, der größer als 1,6 ist, aufgenommenen Aufnahmefilm unter Reduktion der Breiten-Kompression kopiert wird. Zwar ist dann die Bildqualität nicht ganz so gut wie im Falle der beiden zuvor beschriebenen Herstellungsweisen, doch ist es grundsätzlich vorteilhaft, daß man auf diese Weise bereits vorhandene Panorama-Breitwandfilme auf das neue Verfahren umkopieren kann. Diese Möglichkeit des Umkopierens besteht auch bei Aufnahmefilmen, die ohne Breiten-Kompression aufgenommen wurden (oder mit einer Kompression, die kleiner als etwa 1,6 ist); man kopiert dann unter entsprechender Breiten-Kompression. In der Regel muß dabei allerdings zur Anpassung an ein gewünschtes Wiedergabe-Seitenverhältnis eine Maske

0156313

verwendet werden, damit nur ein entsprechendes Teil-Format
der Bilder kopiert wird. Dieses wiederum bedingt eine
Vergrößerung des Wiedergabe-Abbildungsmaßstabes. Die
Bildqualität ist deshalb gemindert. Diese Herstellungsweise
ermöglichst jedoch auch die Nutzung bereits vorhandener
nicht komprimierter Aufnahmefilme. Der Ausdruck "Aufnahmefilm" steht hier für jede Art von bereits vorhandenem
bespieltem Film.

Ansprüche

1. Verfahren zum Herstellen von 35 mm-Kinofilm, bei dem
Filmbilder mit quer zur Filmlänge liegender Bildbreite
und in der Breite um einen anamorphotischen Kompressionsfaktor komprimiertem Bildinhalt hergestellt werden,
dadurch gekennzeichnet, daß ein Kompressionsfaktor von
etwa 1,4 bis 1,6 verwendet wird.

2. Verfahren nach Anspruch 1, dadurch gekennzeichnet, daß
ein Kompressionsfaktor von 1,5 verwendet wird.

3. Verfahren nach Anspruch 1 oder 2, dadurch gekennzeichnet,
daß die Filmbilder in einem Seitenverhältnis
(Verhältnis von Breite zu Höhe) von etwa 1,2 bis 1,4
hergestellt werden.

4. Verfahren nach Anspruch 3, dadurch gekennzeichnet, daß
die Filmbilder in einem Seitenverhältnis (Verhältnis
von Breite zur Höhe des Filmbildes) von etwa 1,3 bis 1,4
hergestellt werden.

5. Verfahren nach Anspruch 3, dadurch gekennzeichnet, daß
ein Seitenverhältnis von etwa 1,233 verwendet wird.

6. Verfahren nach einem der vorhergehenden Ansprüche, dadurch gekennzeichnet, daß der Kinofilm von einem unter horizontaler Bildkompression aufgenommenen Aufnahmefilm größerer Breite unter optischer Verkleinerung kopiert wird.

7. Verfahren nach einem der Ansprüche 1 bis 5, dadurch gekennzeichnet, daß der Kinofilm von einem mit unter horizontaler Bildkompression aufgenommenen Aufnahmefilm gleicher Breite kontaktkopiert wird.

8. Verfahren nach einem der Ansprüche 1 bis 5, dadurch gekennzeichnet, daß der Kinofilm von einem mit einem Breiten-Kompressionsfaktor, der größer als 1,6 ist, aufgenommenen Aufnahmefilm unter Reduktion der Breiten-Kompression kopiert wird.

9. Verfahren nach einem der Ansprüche 1 bis 5, dadurch gekennzeichnet, daß der Kinofilm von einem ohne Breiten-Kompression aufgenommenen Aufnahmefilm unter Breiten-Kompression kopiert wird, wobei gegebenenfalls zur Anpassung an ein gewünschtes Wiedergabe-Seitenverhältnis nur ein entsprechendes Teil-Format der Bilder des Aufnahmefilms kopiert wird.

10. Verfahren zum Wiedergeben von 35 mm-Kinofilm, auf welchem in der Breite anamorphotisch komprimierte Filmbilder mit quer zur Filmlänge liegender Bildbreite angeordnet sind, bei welchem Verfahren ein das Filmbild möglichst weitgehend erfassendes Vorlage-Format der Filmbilder unter Aufhebung der anamorphotischen Kompression in einem Wiedergabeformat mit einem im Vergleich zu dem Vorlageformat größeren Seitenverhältnis (Verhältnis von Bildbreite zur Bildhöhe) wiedergegeben wird, dadurch gekennzeichnet, daß ein nach dem Verfahren nach einem der Ansprüche 1 bis 5 hergestellter Kinofilm verwendet wird.

11. Verfahren nach Anspruch 10, dadurch gekennzeichnet, daß das Vorlageformat in einem Wiedergabeformat mit einem Wiedergabe-Seitenverhältnis von etwa 1,8 bis 2,2 wiedergegeben wird.

12. Verfahren nach Anspruch 11, dadurch gekennzeichnet, daß das Vorlageformat in einem Wiedergabeformat mit einem Wiedergabe-Seitenverhältnis von etwa 1,85 wiedergegeben wird.

13. Verfahren nach Anspruch 11, dadurch gekennzeichnet, daß das Vorlageformat in einem Wiedergabeformat mit einem Wiedergabe-Seitenverhältnis von etwa 2,0 wiedergegeben wird.

14. Verfahren nach Anspruch 10, dadurch gekennzeichnet, daß der Kinofilm in einem Wiedergabeformat mit einem Wiedergabe-Seitenverhältnis von etwa 1,3 bis 1,4 unter möglichst weitgehender Ausnutzung des Filmbildformats oder Vorlageformats wiedergegeben wird.

15. Verfahren nach Anspruch 14, dadurch gekennzeichnet, daß in einem Wiedergabeformat mit einem Wiedergabe-Seitenverhältnis von etwa 1,33 wiedergegeben wird.

16. Verfahren nach Anspruch 14, dadurch gekennzeichnet, daß in einem Wiedergabeformat mit einem Wiedergabe-Seitenverhältnis von etwa 1,375 wiedergegeben wird.

17. Verfahren nach Anspruch 10, dadurch gekennzeichnet, daß der Kinofilm in einem Wiedergabeformat mit einem Wiedergabe-Seitenverhältnis von etwa 2,3 bis 2,6 unter möglichst weitgehender Ausnutzung des Filmbild- oder Vorlageformats wiedergegeben wird.

18. Verfahren nach Anspruch 17, dadurch gekennzeichnet, daß ein Wiedergabeformat mit einem Seitenverhältnis von etwa 2,35 verwendet wird.

19. Verfahren nach Anspruch 17, dadurch gekennzeichnet, daß ein Wiedergabeformat mit einem Seitenverhältnis von etwa 2,55 verwendet wird.

20. Verfahren nach einem der Ansprüche 10 bis 19, dadurch gekennzeichnet, daß man ein Vorlageformat mit einem Seitenverhältnis von etwa 1,2 bis 1,4 unter möglichst weitgehender Ausnutzung des Filmbildformats verwendet.

21. Verfahren nach einem der Ansprüche 10 bis 19, dadurch gekennzeichnet, daß ein Vorlageformat mit einem Seitenverhältnis von etwa 1,3 bis 1,4 unter möglichst weitgehender Ausnutzung des Filmbildformats verwendet wird.

22. Verfahren nach Anspruch 20, dadurch gekennzeichnet, daß ein Vorlage-Seitenverhältnis von etwa 1,233 verwendet wird.

23. Verfahren nach Anspruch 22, dadurch gekennzeichnet, daß ein Vorlageformat von etwa 21,46 x 17,40 mm verwendet wird.

24. Verfahren nach einem der vorhergehenden Ansprüche, dadurch gekennzeichnet, daß man den Kinofilm in Video-Einrichtungen, die für ein Seitenverhältnis von etwa 1,33 eingerichtet sind, verarbeitet.

0156313

25. Filmpackung, dadurch gekennzeichnet, daß sie für Film bestimmt ist, der nach dem Verfahren nach einem der Ansprüche 1 bis 9 hergestellt ist.

26. 35 mm-Filmkamera mit Aufnahme-Anamorphot zur Breiten-Kompression, dadurch gekennzeichnet, daß der Anamorphot einen Kompressionsfaktor von 1,4 bis 1,6, vorzugsweise 1,5, hat.

27. 35 mm-Kinofilm-Wiedergabevorrichtung mit Wiedergabe-Anamorphot zur Aufhebung einer anamorphotischen Breiten-Kompression der Filmbilder, dadurch gekennzeichnet, daß der Wiedergabe-Anamorphot zur Aufhebung einer Kompression um den Faktor 1,4 bis 1,6, vorzugsweise 1,5, ausgelegt ist.

28. Vorrichtung nach Anspruch 27, dadurch gekennzeichnet, daß der Wiedergabe-Anamorphot zur Aufhebung einer Kompression um den Faktor 1,5 ausgelegt ist.

29. Vorrichtung nach einem der Ansprüche 26 bis 28, dadurch gekennzeichnet, daß sie für wahlweise Einschaltung des Anamorphoten ausgebildet ist.